# EUROPEAN PATENT APPLICATION

(11) **EP 4 183 631 A1**
(43) Date of publication of application: **24.05.2023**
(21) Application number: 22208096.2
(22) Date of filing: 17.11.2022
(51) Int. Cl.: B60Q 1/28, B60Q 1/26, F21S 43/14, F21S 43/237, F21S 43/245, F21S 43/247, F21S 43/15, F21S 43/19, F21S 45/48, F21S 45/50, F21S 45/10, F21S 43/27

(54) **FIBER-OPTIC SIGNALING DEVICE, PARTICULARLY FOR MEANS OF TRANSPORT**

(30) Priority: 18.11.2021 IT 202100029156
(71) Applicant: Storti, Giovanni, 46034 Borgo Virgilio (MN) (IT)
(72) Inventor: Storti, Giovanni, 46034 Borgo Virgilio (MN) (IT)
(74) Representative: Modiano, Micaela Nadia

(57) **Abstract**

A fiber-optic signaling device, particularly for means of transport, comprising a control unit (2) adapted to drive at least one light source adapted to diffuse light through at least one optical fiber (12). The control unit (2) is remotely controllable.

## Description

The present invention relates to a fiber-optic signaling device, particularly for means of transport, such as motor vehicles, motorcycles, boats, aircraft, and the like.

As is known, the signaling lights of means of transport in general, and of motor vehicles in particular, are normally provided by means of sources such as incandescent lamps or single LEDs, and are intended to make the motor vehicle visible from a distance. This applies both to moving motor vehicles and, for example, to vehicles operating on roads or at construction sites, which can therefore also be stationary.

In conditions of poor visibility, such as for example when fog occurs, or for example at night or in other situations, it is extremely important that the motor vehicle can be seen well in advance by the vehicles that follow, so as to allow the drivers a reaction time that is sufficient to slow down or change their travel path.

The sources currently used generally create point-like or substantially point-like lighting, since incandescent lamps are normally point sources and single LEDs are not used for large areas of the motor vehicle but are in any case confined to the headlamp area and therefore provide reduced lighting.

The aim of the present invention is to provide a fiber-optic signaling device, particularly for means of transport, such as motor vehicles, motorcycles, boats, aircraft, and the like, that allows to provide a lighting system with light of variable color and intensity which can be managed by the user and allows increased visibility in conditions in which the vehicle is in fog, at night, or in other difficult situations.

Within this aim, an object of the present invention is to provide a fiber-optic signaling device, particularly for means of transport, such as motor vehicles, motorcycles, boats, aircraft, and the like, that can be inserted in a component of the means of transport.

Another object of the present invention is to provide a fiber-optic signaling device, particularly for means of transport, such as motor vehicles, motorcycles, boats, aircraft, and the like, the signaling range of which can be chosen at will by the user.

Not least object of the present invention is to provide a fiber-optic signaling device, particularly for means of transport, such as motor vehicles, motorcycles, boats, aircraft, and the like, that is highly reliable, relatively easy to provide and at competitive costs.

This aim and these and other objects which will become better apparent hereinafter are achieved by a fiber-optic signaling device, particularly for means of transport, such as motor vehicles, motorcycles, boats, aircraft, and the like, characterized in that it comprises a control unit adapted to drive a light source which is adapted to diffuse light through at least one optical fiber, said control unit being remotely controllable.

Further characteristics and advantages of the invention will become better apparent from the description of preferred but not exclusive embodiments of the device according to the present invention, illustrated by way of non-limiting example in the accompanying drawings, wherein:

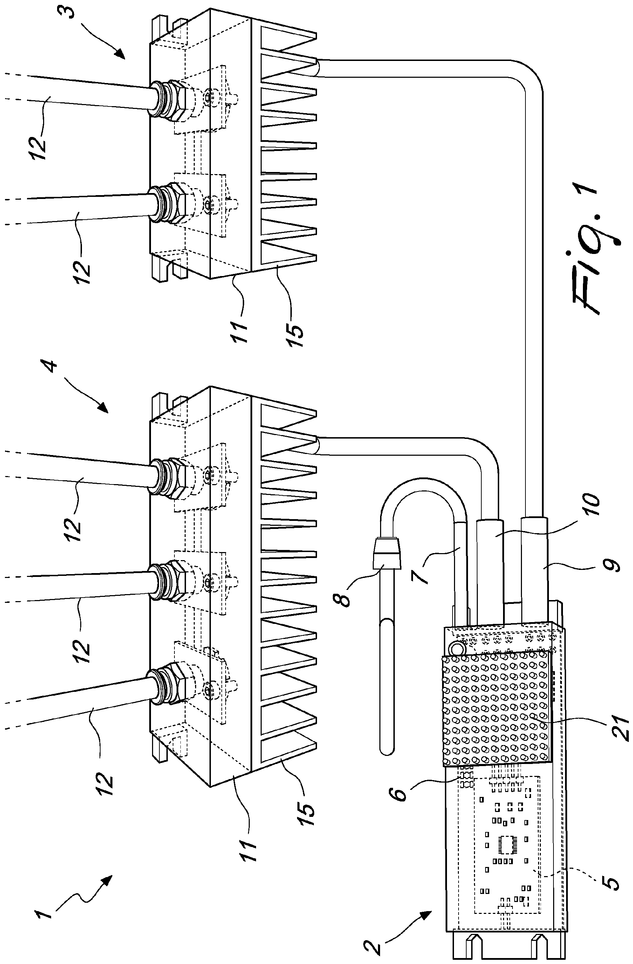

Figure 1 is a schematic perspective view of an embodiment of the fiber-optic signaling device according to the present invention;

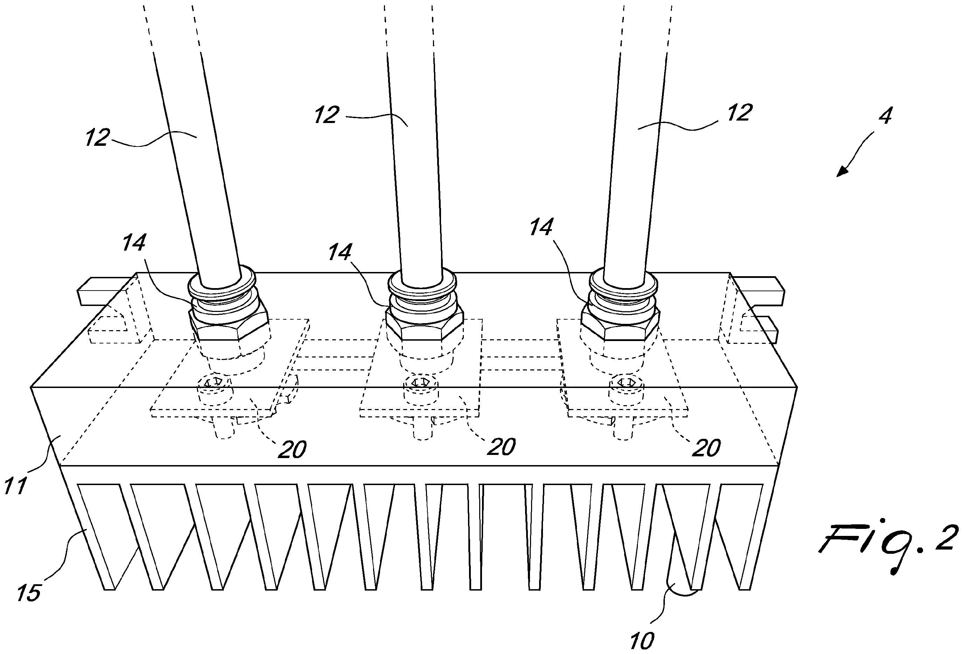

Figure 2 is a perspective view of a component of the device according to the present invention;

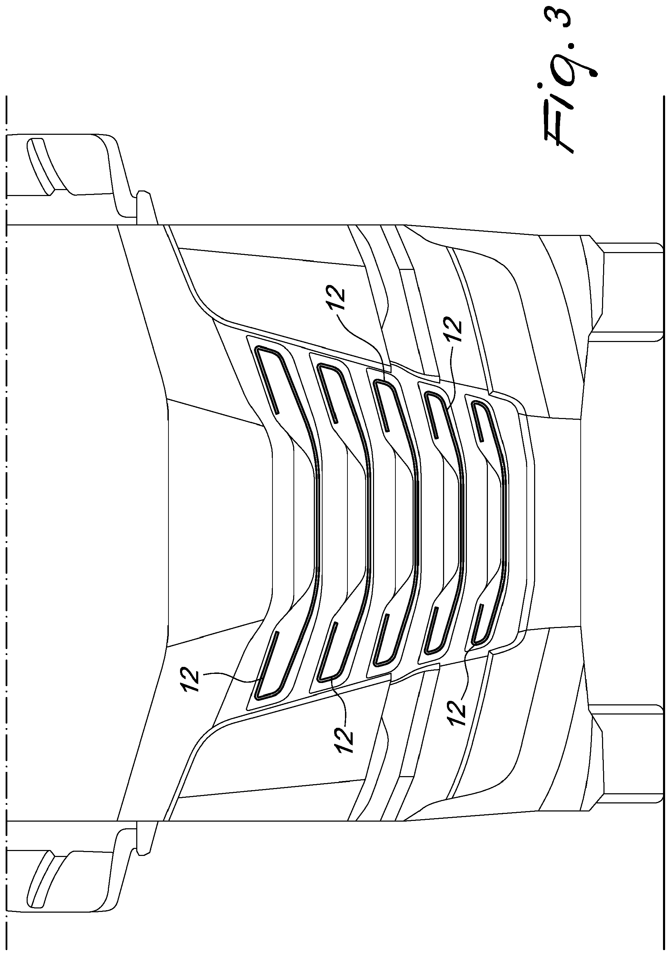

Figure 3 is a view of an example of application of the device according to the present invention to the front of an articulated rig;
Figure 4 is view of a detail of Figure 3;

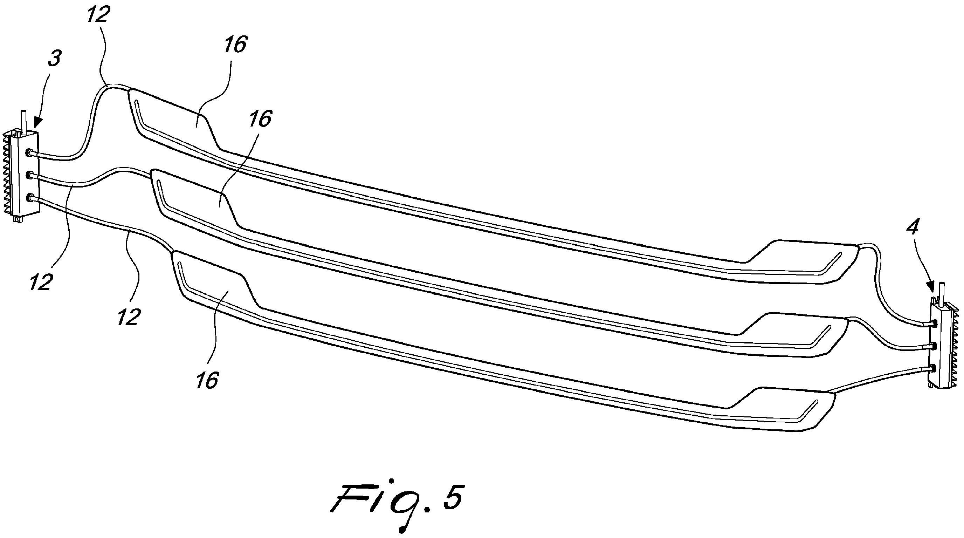

Figure 5 is a view of a possible further embodiment of the device according to the invention.

With reference to the figures, the fiber-optic signaling device, particularly for means of transport, such as motor vehicles, motorcycles, boats, aircraft, and the like, according to the present invention, is generally designated by the reference numeral 1.

The device comprises at least one control unit 2 adapted to drive at least one LED module 3, 4 and, in the illustrated example, for example two LED modules 3 and 4, respectively, with 2 LEDs and with 3 LEDs.

The control unit 2 comprises an electronic board 5 with Bluetooth functionality and circuitry capable of driving the LED modules 3, 4.

The control unit 2 is conveniently embedded in an epoxy resin block 6 for protection.

The control unit 2 has a power supply input 7, provided with at least one fuse 8, and a plurality of outputs, connected to respective signal cables 9 and 10, for the respective driving of the LED modules 3 and 4.

The LED modules 3 and 4 each comprise a heat sink 15, a hermetic resin block 11 which is arranged in a position above the heat sink and through which the corresponding signal cable 9, 10 that arrives from the control unit 2 passes.

The signal cable 9, 10 supplies one or more optical fibers 12, which are inserted in the LED module 3, 4 by means of connectors 14.

The reference numeral 20 designates the LEDs powered by the control unit and on which the optical fibers 12 are inserted in order to carry the lights of the LEDs to a distance.

In practice, at least one end of each optical fiber 12 is inserted in an LED, so that the optical fiber can receive the light of the LED at at least one end of said fiber.

The light is emitted by the optical fibers along their longitudinal extension, particularly from their lateral surface.

In this manner, by virtue of the light that exits from the lateral outer surface of the optical fibers 12, it is possible to obtain one or more light lines, formed indeed by the lit optical fibers 12, which can be applied to parts of the means of transport and in particular to external parts of the means of transport.

The optical fibers can be embedded in a component 16 of the means of transport, such as for example the front or the like, in a part therefore made of plastic, resin or others. The fibers can be inserted in the component of the means of transport by using a supporting sheath 30, or the sheath 30, with the channel of optical fiber inside it, can be applied directly in the slots of the vehicle or means of transport and/or in dedicated free spaces.

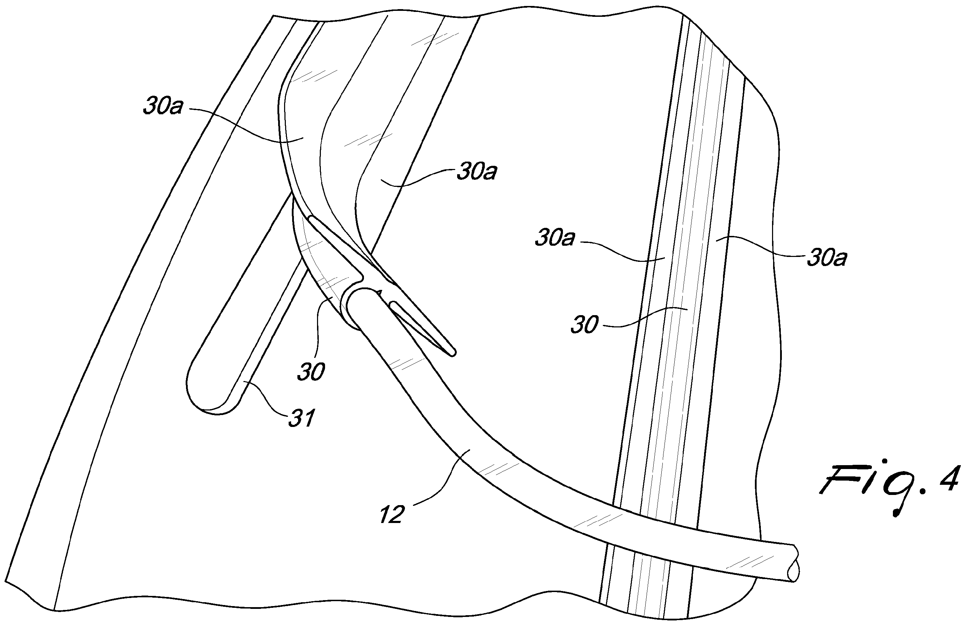

Preferably, the supporting sheath 30 is provided with wings 30a for fixing it, for example by adhesive bonding or other suitable means, to the edges of slots 31 which are designed to accommodate it and can be formed in the component of the means of transport or in the means of transport itself, as shown in Figure 4. Furthermore, the sheath 30 can be crossed by the light that arrives from the optical fiber inside it, so that the light is visible externally through said sheath and the corresponding slot 31.

Moreover, as an alternative, the optical fiber can be integrated directly in the component of the means of transport without using the sheath, in this case, by immersing the optical fiber in the same resin used to provide the component of the means of transport.

Conveniently, the component of the means of transport is constituted by a component designed to be arranged in the external part of said means of transport, so as to provide, by means of its lighting by the optical fiber, a valid signaling of the means of transport.

As shown in Figure 8, in order to increase the visibility, intensity and uniformity of the light through the optical fiber, each end of the length of optical fiber is inserted in a LED, so as to create a closed circuit.

Essentially, therefore, the device according to the present invention provides for a control unit 2 adapted to drive at least one and preferably a plurality of LEDs 20 to which respective optical fibers are connected in order to carry the light of the LED or LEDs to a distance within a component of the means of transport that can, for example, be the front or another part thereof.

This makes it possible to provide the lighting of an extended part of the means of transport, since the optical fiber can be chosen of a desired length and therefore extend for example from one end to the other end of the front of the means of transport, such as, for example, in the case of motor vehicles, such as cars, trucks, articulated rigs, trailer trucks, or the like. In this case, the component may be, for example, an element of the grille of a motor vehicle or another element arranged on the outside of said motor vehicle.

The device according to the present invention provides moreover that the activation of the light source (LED) and the modification of its color can be performed by virtue of an iOS or Android application via a smartphone. Therefore, the user can, from his own mobile phone, activate the light source, therefore the one or more LEDs 20, and choose the color with which to activate said LEDs 20.

The LED modules, as mentioned, are provided with a heat sink 15, which allows to cool them down.

The control unit also is provided with a dissipation device 21.

It should be noted that the device according to the invention may find a valid application on any type of means of transport and therefore not only on motor vehicles but also on motorcycles, boats, aircraft or other means of transport.

In practice it has been found that the fiber-optic signaling device according to the present invention fully achieves the intended aim and objects, since it allows to create a luminous signal of extended length, using the extension of the optic fiber, starting from at least one LED driven by the control unit, which allows to activate it and to change its color as chosen by the user by means of an application on a smartphone.

The device thus conceived is susceptible of numerous modifications and variations, all of which are within the scope of the accompanying claims.

All the details may furthermore be replaced with other technically equivalent elements.

In practice, the materials used, as well as the contingent shapes and dimensions, may be any according to the requirements and the state of the art.

The disclosures in Italian Patent Application No. 102021000029156, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A fiber-optic signaling device, particularly for means of transport, **characterized in that** it comprises a control unit (2) adapted to drive at least one light source adapted to diffuse light through at least one optical fiber (12), said control unit (2) being remotely controllable.

2. The device according to claim 1, **characterized in that** said light source comprises at least one LED (20), said at least one LED (20) and said optical fiber (12) being accommodated in an LED module (3, 4) which is provided with a heat sink (15) and receives signal from said control unit (2).

3. The device according to claim 1 or 2, **characterized in that** said at least one LED (20) is embedded in an epoxy resin block (6).

4. The device according to one or more of the preceding claims, **characterized in that** said at least one optical fiber (12) is coupled to said at least one LED (20) by passing within said resin block (6).

5. The device according to one or more of the preceding claims, **characterized in that** said control unit (2) comprises a Bluetooth functionality.

6. The device according to one or more of the preceding claims, **characterized in that** said control unit (2) drives a plurality of LED modules (3, 4).

7. The device according to one or more of the preceding claims, **characterized in that** said control unit (2) can be controlled remotely by means of an application which can be installed on a smartphone.

8. The device according to one or more of the preceding claims, **characterized in that** said application installed on a smartphone allows to activate at least one LED (20) and to choose the color of the light emitted by said at least one LED (20), for its transmission by means of said at least one optical fiber (12).

9. A component of a means of transport, **characterized in that** it comprises a device according to one or more of the preceding claims, with said at least one optical fiber (12) inserted within said component of a means of transport.

10. The component of a means of transport according to claim 9, **characterized in that** said optical fiber (12) is inserted in said component of a means of transport within a supporting sheath (30).

11. The component of a means of transport according to claim 9, **characterized in that** said at least one optical fiber (12) is embedded in the resin with which said component of a means of transport is made.

12. A means of transport, **characterized in that** it comprises a device according to one or more of claims 1 to 8, wherein said at least one optical fiber (12) is inserted in a component of the means of transport.

13. A means of transport, **characterized in that** it comprises a device according to one or more of claims 1 to 8, wherein said at least one optical fiber (12) is inserted in slots of the means of transport or in dedicated free spaces.
